Europäisches Patentamt

(19) European Patent Office

Office européen des brevets

(11) Veröffentlichungsnummer: **0 149 154**
**B1**

(12) **EUROPÄISCHE PATENTSCHRIFT**

(45) Veröffentlichungstag der Patentschrift:
12.08.87

(51) Int. Cl.⁴: **B 01 D 13/02**

(21) Anmeldenummer: 84115405.7

(22) Anmeldetag: 14.12.84

(54) Verfahren zur Herstellung von wässrigen Lösungen von Hydroxylammoniumcarbonat.

(30) Priorität: 28.12.83 DE 3347258

(43) Veröffentlichungstag der Anmeldung:
24.07.85 Patentblatt 85/30

(45) Bekanntmachung des Hinweises auf die Patenterteilung:
12.08.87 Patentblatt 87/33

(84) Benannte Vertragsstaaten:
BE CH DE FR GB IT LI NL

(56) Entgegenhaltungen:
FR-A-2 243 904

CHEMICAL ABSTRACTS, Band 94, 1981, Seite 134, Nr. 141981y, Columbus, Ohio, US; Y. CHANG u.a.: "Conversion of hydroxylamine hydrochloride to hydroxylamine nitrate by electrodialysis and water-splitting processes" & IND. ENG. CHEM. PROCESS DES. DEV. 1981, 20(2), 361-366

(73) Patentinhaber: BASF Aktiengesellschaft, Carl-Bosch- Strasse 38, D-6700 Ludwigshafen (DE)

(72) Erfinder: Weiss, Franz- Josef, Dr. Chem., Schilfweg 1, D-6706 Neuhofen (DE)
Erfinder: Habermann, Wolfgang, Chem.- Ing., Gonsenheimer Spiess 8, D-6500 Mainz 1 (DE)
Erfinder: Hammes, Peter, Dr. Dipl.- Ing., Haagweg 14, D-6701 Ruppertsberg (DE)
Erfinder: Ritz, Josef, Dr. Chem., Osloer Weg 8, D-6700 Ludwigshafen (DE)
Erfinder: Thomas, Erwin, Chem., Borngasse 12, D-6713 Freinsheim (DE)
Erfinder: Thoma, Peter, Dr. Dipl.- Ing., Heidelberger Ring 16, D-6710 Frankenthal (DE)

## Beschreibung

Hydroxylamin wird technisch in Form seiner Salze, z. B. Sulfat oder Phosphat, durch katalytische Reduktion von Stickstoffmonoxid oder Salpetersäure hergestellt. Bei der weiteren Umsetzung der Hydroxylammoniumsalze z. B. zu Oximen, werden die entsprechenden Anionen als Säuren in Freiheit gesetzt, Häufig ist es jedoch schwierig, solche Fremdanionen wieder aus dem Reaktionsgemisch zu entfernen. Stellt man dagegen freies Hydroxylamin durch Umsetzen von Hydroxylammoniumsalzen mit Alkali her, so lassen sich auch hier die Fremdanionen nur ungenügend entfernen. Es ist auch bereits ein Verfahren bekannt, bei dem man die Anionen durch Elektrodialyse entfernt. Entsprechend dem in der DE-OS 20 62 436 beschriebenen Verfahren wird eine wäßrige Lösung von Hydroxylammoniumsulfat in Gegenwart von Cyclohexanon unter Bildung von Cyclohexanonoxim der Elektrolyse unterworfen. Diese Arbeitsweise ist wegen der Instabilität des Hydroxylamins und der geringen Lebensdauer der semipermeablen Trennwände wenig geeignet.

Es war deshalb die technische Aufgabe gestellt, ein Verfahren zur Herstellung von wäßrigen Lösungen von Hydroxylammoniumcarbonat zur Verfügung zu stellen, bei dem hohe Ausbeuten erzielt werden, und wäßrige Lösungen von Hydroxylammoniumcarbonat mit einem möglichst geringen Gehalt an Fremdanionen erzeugt werden.

Diese technische Aufgabe wird gelöst in einem Verfahren zur Herstellung von wäßrigen Lösungen von Hydroxylammonrumcarbonat aus wäßrigen Hydroxylammoniumsalzlösungen durch Elektrodialyse, wobei man die wäßrige Hydroxylammoniumsalzlösung der Mittelzone einer Elektrolysezelle, die durch semipermeable Trennwände in eine Kathodenzone, eine Anodenzone und eine Mittelzone unterteilt ist, zuführt und elektrolysiert, dadurch gekennzeichnet, daß man als Katolyt wäßrige Lösungen von Ammoniumcarbonaten, Alkalicarbonaten oder der entsprechenden Bicarbonate verwendet.

Das neue Verfahren hat den Vorteil, daß es mit hohen Ausbeuten verläuft und die Zersetzung des Hydroxylamins unterdrückt wird. Weiter hat das neue Verfahren den Vorteil, daß die semipermeablen Trennwände insbesondere zum Kathodenraum eine längere Lebensdauer haben. Ferner hat das neue Verfahren den Vorteil, daß es gelingt, wäßrige Hydroxylammoniumcarbonatlösungen mit einem möglichst geringen Gehalt an Fremdanionen, z. B. kleiner 10 ppm, herzustellen. Schließlich werden Hydroxylammoniumcarbonatlösungen zur Verfügung gestellt, die bei weiteren Umsetzungen keine Fremdanionen einschleppen, da das Carbonatanion bei der Umsetzung in leicht entfernbares Kohlendioxid zerfällt.

Erfindungsgemäß geht man von wäßrigen Lösungen von Hydroxylammoniumsalzen aus. Besonders geeignet sind Hydroxylammoniumsalze von beständigen Sauerstoffsäuren wie Schwefelsäure, Salpetersäure, Phosphorsäure oder Carbonsäuren wie Essigsäure oder Propionsäure. Besondere technische Bedeutung haben Hydroxylammoniumsulfat- und Phosphatlösungen erlangt. In der Regel geht man von 5 bis 30 gew.%igen wäßrigen Hydroxylammoniumsalzlösungen aus. Bei der Herstellung höher konzentrierter Hydroxylammoniumcarbonatlösungen ergänzt man vorteilhaft das verbrauchte Hydroxylammoniumsalz bis die gewünschte Endkonzentration erreicht ist. Vorteilhaft haben die verwendeten Hydroxylammoniumsalzlösungen einen Gehalt an Metallionen der 1., 2., 5., 6., 7. und 8. Nebengruppe des Periodischen Systems von weniger als 1 ppm.

Die Elektrolyse wird in einer Zelle, die durch zwei semipermeable Trennwände in eine Kathodenzone, eine Anodenzone und eine Mittelzone unterteilt ist, durchgeführt. Die zu elektrolysierende wäßrige Lösung von Hydroxylammoniumsalzen wird der Mittelzone zugeführt. Als Anolyt in der Anodenzone verwendet man in der Regel wäßrige Lösungen von Sauerstoffsäuren, insbesondere solche, die dem Anion der zu verwendenden Hydroxylammoniumsalzlösung entsprechen. Vorteilhaft haben die verwendeten wäßrigen Lösungen einen Gehalt von 0,1 bis 50 Gew.% an Sauerstoffsäuren. Eine besonders gute Stromausbeute erzielt man, wenn man anstatt wäßrigen Säurelösungen eine wäßrige Lösung von Alkalihydroxiden, z. B. Natriumhydroxid, oder Alkalicarbonaten, z. B. Natriumcarbonat, ferner Erdalkalihydroxiden, z. B. Kalziumhydroxid, verwendet.

In der Kathodenzone verwendet man erfindungsgemäß als Katholyt wäßrige Lösungen von Ammoniumcarbonaten, Alkalicarbonaten oder die entsprechenden Bicarbonate. Geeignete Ammoniumcarbonate sind Ammoniumcarbonat, Ammoniumbicarbonat oder Methylammoniumcarbonat. Bevorzugt verwendet man Natriumcarbonat oder Kaliumcarbonatlösungen. Vorteilhaft haben die wäßrigen Lösungen einen Gehalt von 0,5 bis 50, insbesondere von 1 bis 20 Gew.% an Ammonium- oder Alkalicarbonaten. Es hat sich ferner bewährt, während der Elektrolyse in die wäßrige Lösung von Alkalicarbonaten im Kathodenraum Kohlendioxid einzuleiten, um den Gehalt an Carbonationen aufrechtzuerhalten. Zusätzlich ist von Vorteil, in die Mittelzone Kohlendioxid einzuleiten.

Vorteilhaft hat der Katholyt einen Gehalt an Ammoniak und/oder Aminen, z. B. von 0,001 bis 50 Gew.%, vorzugsweise von 0,02 bis 10 Gew.%, insbesondere von 0,05 bis 0,8 Gew.%. Geeignete Amine sind primäre, sekundäre oder tertiäre Amine z. B. mit Alkylresten mit 1 bis 6 Kohlenstoffatomen, die auch Hydroxylgruppen oder Alkoxygruppen als Substituenten haben können. Geeignet sind auch Cycloalkylamine mit 5 bis 8 Kohlenstoffatomen im Ring. Ferner sind geeignet 5- bis 7-gliedrige cyclische Amine, in denen das Stickstoffatom ein Ringglied darstellt. Geeignete Amine sind beispielsweise Tripropylamin, Tributylamin, Dipropylamin, n-Propylamin, Dibutylamin, i-Butylamin, 2-Methoxyethylamin, 3-Methoxypropylamin, Ethanolamin, Diethanolamin, Methoxymethylamin, Cyclohexylamin, Aminoethylmorpholin, Aminoethylpyrrolidon sowie Polyamine, die durch Umsetzen von Aminen mit Ethylenimin erhältlich sind. Die Amine können im Katolyten gelöst oder dispergiert vorliegen.

Die Elektrolyse führt man vorteilhaft bei Stromdichten von 0,1 bis 10 kA/m$^2$, insbesondere bei Stromdichten von 1 bis 3,5 kA/m$^2$ durch. Vorteilhaft hält man hierbei eine Temperatur von 10 bis 40° C, vorzugsweise von 15 bis 28° C ein.

Als Kathoden verwendet man vorteilhaft korrosionsbeständige Materialien mit geringer Wasserstoffüberspannung, z. B. Edelstähle, Chrom-Nickelstähle, Nickel, Nickeleisenlegierungen mit einem Eisengehalt von 65 bis 95 Gew.%, mit Nickel-Eisenlegierungen beschichtetes Eisen, vorzugsweise jedoch Graphit oder gegen Alkali beständige Titan- oder Zirkonlegierungen, wie Titan-Eisen, Titan-Nickel, Zirkon-Eisen oder Zirkon-Nickel. Geeignete Anodenmaterialien sind beispielsweise Titan, Tantal, Niob oder Niob-Tantal-Legierungen, die oberflächlich mit Platinmetallen, Platinmetalloxiden, vorzugsweise jedoch mit Platinaten dotiert sind und eine geringe Sauerstoffüberspannung haben. Die Sauerstoffüberspannung sollte bei 1 kA/m$^2$ weniger als 300 mV betragen.

Vorteilhaft führt man die Elektrolyse in der Mittelzone unter Ausschluß von molekularem Sauerstoff durch. Der Gehalt an molekularem Sauerstoff sollte einen Wert von 10 ppm nicht überschreiten.

Es hat sich auch als vorteilhaft erwiesen, wenn die zu elektrolysierenden wäßrigen Lösungen von Hydroxylammoniumsalzen einen Gehalt an Stabilisatoren haben. Geeignete Stabilisatoren sind beispielsweise 8-Hydroxy-chinaldin, 2,3-Di-dehydro-hexono-1,4-lacton, Flavone, wie Morin, Hydroxychinoline wie 8-Hydroxychinolin, Anthocyanidine wie Cyanidiniumchlorid, Hydroxyanthrachinone wie Chinalizarin, die gegebenenfalls in Kombination mit Polyhydroxyphenolen wie Pyrogallol verwendet werden. Weitere geeignete Stabilisatoren sind z. B. Quercetin, Benzonitril, Benzamidoxim, Isocyanate, N-Phenyl-N-hydroxythioharnstoff und Alkalisalze der Ethylendiamintetraessigsäure. Die Konzentration an Stabilisatoren, bezogen auf das Hydroxylammoniumsalz, beträgt vorteilhaft 5.10$^{-4}$ bis 1 Gew.%, insbesondere 5.10$^{-3}$ bis 5.10$^{-2}$ Gew.%. Besonders bewährt haben sich Stabilisatoren, die mit Metallionen Chelate bilden.

In der Elektrolysezelle verwendet man bevorzugt semipermeable Trennwände aus Anionenaustauscherharzen. Besonders geeignet sind semipermeable Trennwände, die zumindest auf der Seite zur Mittelzone schwach basisch reagieren. Geeignete Membranen sind beispielsweise Anionenaustauschermembranen mit der Gruppe R-N(CH$_3$)$_3$$^+$ oder schwach basischen Gruppen wie polymere Amine oder Polymere bzw. Copolymere, die primäre, sekundäre oder tertiäre Amine, z. B. vom Typ R-NH$_2$, R-NH(CH$_3$), insbesondere R-N(CH$_3$)$_2$ als ladungstragende Gruppen enthalten. Besonders geeignete Träger für die ionenaustauschenden Gruppen sind Polystyrol-Divinylbenzolcopolymerisate mit 4 bis 16 Gew.%, insbesondere 6 bis 8 Gew.% Divinylbenzol.

Andere geeignete schwach basische Membranen sind z. B. Membranen aus hydrierten Styrol-Butadienblockcopolymeren, Polybutadien, Polyisopren, Polyisobutylen oder Polyethylen, die feinteiliges Titanoxidhydrat, Zirkonoxidhydrat, Kaolinit, Montmorillonit, Apatit, synthetischen Hydroxylapatit, Magnesiumoxidhydrat, Aluminiumoxidhydrat oder Aluminium-Zirkonoxidhydrat in Mengen von 40 bis 70 Gew.% enthalten. Bevorzugt verwendet man Titanoxidhydrat, Zirkonoxidhydrat, synthetischen Hydroxylapatit oder Zirkon-Aluminiumoxidhydrat.

Es ist auch möglich, Membranen mit den oben genannten schwach basischen Mitteln, gegebenenfalls zusammen mit einem Binder, wie hydriertem Styrol-Butadienblockcopolymeren, Polyethylen, Polypropylen, Polybutadien zu beschichten. Die schwach basische Schicht wird erzeugt durch Einarbeiten der schwach basischen Mittel in das thermoplastische Bindemittel auf einen Walzenstuhl oder durch Auftragen von in organischen Lösungsmitteln gelösten bzw. in Wasser fein verteilten Bindern, z. B. Latexdispersionen von Polyisobutylen, Polybutadien oder Polyisopropylen, die schwach basische Mittel enthalten, auf die Membranen.

Geeignet sind auch polymere Membranschichten, z. B. aus Vinylchlorid und/oder Acrylnitril, die insbesondere 40 bis 75 Gew.% polymere, tertiäre Amine mit einem Molekulargewicht größer 250, insbesondere größer 500, enthalten. Die Polymeren werden bei der Membranbeschichtung gelöst, z. B. in Dimethylformamid oder Dimethylsulfoxid und anschließend aufgetrocknet.

Die nach dem Verfahren der Erfindung erhältlichen wäßrigen Lösungen von Hydroxylammoniumcarbonat eignen sich zur Herstellung von Oximen.

Das Verfahren nach der Erfindung sei an folgenden Beispielen veranschaulicht.

## Beispiel 1

Eine dreigeteilte Elektrodialysezelle wird mit 2 Anionenaustauschermembranen von je 1 dm$^2$ Elektrodenfläche bestückt. Die Anionenaustauschermembranen bestehen aus einem Styrol-Divinylbenzol-Copolymerisat (Divinylbenzolanteil ~ 6 %), welches quaternäre Ammoniumgruppen als Ladungsträger enthält. Zum Anodenraum befindet sich eine Titanstreckmetallelektrode (von 1 dm$^2$), die oberflächlich mit Platinaten vom Typ Li$_{0,3}$Pt$_3$O$_4$ dotiert ist. Die Kathode von (1 dm$^2$) besteht aus Nickel. Als Katolyt wird 10 gew.%ige wäßrige Kaliumcarbonatlösung mit 0,1 Gew.% Dibutylamin und im Anolyten 3 gew.%ige, wäßrige Schwefelsäure eingesetzt. Der Katholyt wird während der Elektrolyse mit Kohlendioxid begast. In der Mittelkammer der Elektrodialysezelle werden 1500 g wäßrige, 25 gew.%ige Hydroxylammoniumsulfatlösung mit 100 ppm Benzonitril bei 24°C umgepumpt. Bei einer Stromdichte von 15 A/dm$^2$, Anfangszellspannung von 6,8 V erhält man nach 250 Ah eine wäßrige Hydroxylammoniumcarbonatlösung mit < 20 ppm Sulfationen. Die Materialausbeute, bezogen auf eingesetztes Hydroxylammoniumsulfat, beträgt ~ 98 %, die Stromausbeute, bezogen auf Sulfat, ~ 52 %.

Setzt man im Katholyten kein Dibutylamin ein, dann beträgt die Materialausbeute, bezogen auf eingesetztes Hydroxylammoniumsulfat, ~ 91 %.

## Beispiel 2

Eine dreigeteilte Elektrodialysezelle wie in Beispiel 1 wird mit zwei Anionenaustauschermembranen aus einem Vinylchlorid-Acrylnitril-Mischpolymerisat, welches quarternäre Ammoniumgruppen als Ladungsträger enthält, bestückt. Als Kathode wird eine Nickelelektrode und als Anode eine mit Platinaten dotierte Titananode eingesetzt. Der Katholyt besteht aus 10 gew.%iger, wäßriger Kaliumcarbonatlösung, die mit Kohlendioxid begast wird. Als Anolyt setzt man 2 gew.%ige, wäßrige Schwefelsäure ein. In der Mittelkammer der Elektrodialysezelle werden 1500 g wäßrige, 25 gew.%ige Hydroxylammoniumsulfatlösung umgepumpt, welche gleichfalls mit Kohlendioxid begast wird. Bei einer Stromdichte von 20 A erhält man nach 292 Ah eine wäßrige Hydroxylammoniumcarbonatlösung mit < 20 ppm Sulfationen. Die Materialausbeute, bezogen auf eingesetztes Hydroxylammoniumsulfat, beträgt ~ 92,5 %.

Ein Zusatz von 0,15 Gew.% Dibutylamin zum Katolyten erhöht die Materialausbeute auf ~ 98 %. Die Stromausbeute, bezogen auf Sulfat, beträgt ~50 %.

## Patentansprüche

1. Verfahren zur Herstellung von wäßrigen Lösungen von Hydroxylammoniumcarbonat aus wäßrigen Hydroxylammoniumsalzlösungen durch Elektrodialyse, wobei man die wäßrigen Hydroxylammoniumsalzlösungen der Mittelzone einer Elektrolysezelle, die durch semipermeable Trennwände in eine Kathodenzone, eine Anodenzone und eine Mittelzone unterteilt ist, zuführt und elektrolysiert, dadurch gekennzeichnet, daß man als Katholyt wäßrige Lösungen von Ammoniumcarbonaten, Alkalicarbonaten oder der entsprechenden Bicarbonate verwendet.

2. Verfahren nach Anspruch 1, dadurch gekennzeichnet, daß man in den Katholyt Kohlendioxid einleitet.

3. Verfahren nach den Ansprüchen 1 und 2, dadurch gekennzeichnet, daß der Gehalt an molekularem Sauerstoff in der Mittelzone weniger als 10 ppm beträgt.

4. Verfahren nach den Ansprüchen 1 bis 3, dadurch gekennzeichnet, daß die verwendete Hydroxylammoniumsalzlösung einen Gehalt an Stabilisatoren für Hydroxylamin hat.

5. Verfahren nach den Ansprüchen 1 bis 4, dadurch gekennzeichnet, daß die verwendete Hydroxylammoniumsalzlösung einen Gehalt an Schwermetallen von weniger als 1 ppm aufweist.

6. Verfahren nach den Ansprüchen 1 bis 5, dadurch gekennzeichnet, daß die semipermeablen Trennwände zumindestens auf der Seite, die der Mittelzone zugewendet sind, schwach basisch sind.

7. Verfahren nach den Ansprüchen 1 bis 6, dadurch gekennzeichnet, daß man in die Mittelzone Kohlendioxid einleitet.

8. Verfahren nach den Ansprüchen 1 bis 7, dadurch gekennzeichnet, daß der Katholyt einen Gehalt an Ammoniak und/oder Aminen hat.

## Claims

1. A process for the preparation of an aqueous solution of hydroxylammonium carbonate from an aqueous hydroxylammonium salt solution by electrodialysis, the aqueous hydroxylammonium salt solution being fed into the middle zone of an electrolysis cell which is divided into a cathode zone, an anode zone and a middle zone by means of semi-permeable membranes, and being electrolyzed, wherein the catholyte used is an aqueous solution of an ammonium carbonate or an alkali metal carbonate or of one of the corresponding bicarbonates.

2. A process as claimed in claim 1, wherein carbon dioxide is passed into the catholyte.

3. A process as claimed in claims 1 and 2, wherein the content of molecular oxygen in the middle zone is less than 10 ppm.

4. A process as claimed in claims 1 to 3, wherein the hydroxylammonium salt solution used contains a stabilizer for hydroxylamine.

5. A process as claimed in claims 1 to 4, wherein the hydroxylammonium salt solution used contains less than 1 ppm of heavy metals.

6. A process as claimed in claims 1 to 5, wherein the semipermeable membranes are weakly basic, at least on the side which faces the middle zone.

7. A process as claimed in claims 1 to 6, wherein carbon dioxide is passed into the middle zone.

8. A process as claimed in claims 1 to 7, wherein the catholyte contains ammonia and/or amines.

## Revendications

1. Procédé de préparation de solutions aqueuses de carbonate d'hydroxyl-ammonium par électrodialyse de solutions aqueuses de sels d'hydroxyl-ammonium, dans lequel les solutions aqueuses de sels d'hydroxyl-ammonium sont soumises à l'électrolyse dans la partie centrale d'une cellule d'électrolyse subdivisée par des cloisons semiperméables en une zone cathodique, une zone centrale et une zone anodique, caractérisé en ce que le catholyte est une solution aqueuse de carbonates d'ammonium ou de carbonates de métaux alcalins ou des hydrogéno-carbonates correspondants.

2. Procédé suivant la revendication 1, caractérisé en ce que l'on introduit de l'anhydride carbonique dans le catholyte.

3. Procédé suivant les revendications 1 et 2, caractérisé en ce que dans la zone centrale, la concentration en oxygène moléculaire est maintenue inférieure à 10 ppm.

4. Procédé suivant les revendications 1 à 3, caractérisé en ce que la solution de sels d'hydroxyl-ammonium utilisée contient des agents de stabilisation de l'hydroxyl-amine.

5. Procédé suivant les revendications 1 à 4, caractérisé en ce que la solution de sels d'hydroxyl-ammonium utilisée possède une teneur en métaux lourds inférieure à 1 ppm.

6. Procédé suivant les revendications 1 à 5, caractérisé en ce que les cloisons semiperméables sont faiblement basiques au moins du côté tourné vers la zone centrale.

7. Procédé suivant les revendications 1 à 6, caractérisé en ce que l'anhydride carbonique est introduit dans la zone centrale.

8. Procédé suivant les revendications 1 à 7, caractérisé en ce que le catholyte possède une certaine teneur en ammoniac et(ou) en amines.